# EUROPÄISCHE PATENTSCHRIFT

(11) **EP 3 538 797 B1**
(45) Veröffentlichungstag und Bekanntmachung des Hinweises auf die Patenterteilung: **23.09.2020**
(21) Anmeldenummer: 17804798.1
(22) Anmeldetag: 06.11.2017
(51) Int. Cl.: F16J 15/52

(54) **DICHTUNGSANORDNUNG**
SEAL ARRANGEMENT
SYSTÈME D'ÉTANCHÉITÉ

(30) Priorität: 09.11.2016 DE 202016106250 U
(43) Veröffentlichungstag der Anmeldung: 18.09.2019
(73) Patentinhaber: WP Systems GmbH, 01945 Ruhland (DE)
(72) Erfinder: MÜLLER, Holger, 01855 Sebnitz (DE); RENNER, Ole, 01099 Dresden (DE); BOESNER, Jan, 01099 Dresden (DE); HÖFNER, Robert, 01127 Dresden (DE); ZAVESKY, Michael, 01069 Dresden (DE); SCHRAMM, Michael, 02791 Oderwitz (DE)
(74) Vertreter: Sperling, Thomas
(86) Internationale Anmeldenummer: PCT/DE2017/100936
(87) Internationale Veröffentlichungsnummer: WO 2018/086655

(56) Entgegenhaltungen:
- US-A- 5 213 346
- US-A1- 2003 066 933
- US-B1- 7 051 982

## Beschreibung

Die Erfindung betrifft eine Dichtungsanordnung für einen abzudichtenden Spalt, welcher eine Spaltbreite in Spaltquerrichtung und eine Spaltlänge in Spaltlängsrichtung aufweist und zwischen einer ersten und einer zweiten Oberfläche ausgebildet ist.

Die Abdichtung von Spalten ist beispielsweise von Bedeutung bei Wartungskammern von Windkraftanlagen. Windkraftanlagen unterliegen starken Beanspruchungen durch Witterung und Betrieb, wodurch Abnutzungen auftreten, welche eine regelmäßige Wartung und Instandsetzung erfordern. Besonders Schäden an der Beschichtung der Anlagenteile und insbesondere an den Rotorblättern müssen zügig repariert werden, um einen zuverlässigen Betrieb und eine lange Betriebsdauer der Windkraftanlagen zu gewährleisten. Es hat sich gezeigt, dass die Verwendung von speziell entwickelten Wartungskammern zuverlässige und schnelle Reparaturen ermöglicht, wobei eine gewisse Abschirmung gegenüber äußeren Umwelteinflüssen eine wichtige Voraussetzung ist. Das als Blendensystem ausgeführte Dach- und Bodensystem einer solchen Wartungskammer ist an die Geometrie eines Rotorblattes angepasst. Die Wartungskammer ist innen wie eine Werkstatt ausgestattet und sie kann schnell und einfach auf die jeweiligen Rotorblattgrößen abgestimmt werden, wobei der Boden und das Dach sowie das daran befindliche Blendensystem der Kammer bis an die Rotorblattoberfläche heranreicht, um einen ungehinderten Zugang zur Reparaturstelle am Rotorblatt zu ermöglichen.

Im Freien durchgeführte Wartungsarbeiten sind gewöhnlich sehr stark von der äußeren Witterung abhängig. Dadurch kann es notwendig sein, die Arbeiten bei schlechtem Wetter zu stoppen, was zu kostspieligen Verzögerungen in der Reparatur führt. Eine Wartungskammer, welche eine Umleitung von Regenwasser um die Reparaturstelle herum ermöglicht und somit die Reparaturstelle trocken hält, sorgt für schnelle und planbare Reparaturen, was zu geringeren Ausfallzeiten der Anlagen führt. Dazu ist eine gute, zuverlässige Abdichtung der Reparaturstelle gegen Regenwasser zu gewährleisten, so dass die Reparaturarbeiten witterungsunabhängig möglich sind.

Für die Abdichtung von ebenen Oberflächen, wie Fassaden, sind geeignete Dichtungssysteme und Dichtungen bekannt.
In der DE 10 2008 034 347 A1 ist beispielsweise ein Dichtungsprofilband beschrieben, welches einen Spalt zwischen einem plattenförmigen Element und einem das plattenförmige Element haltenden Halteprofil abdichtet. Für eine Abdichtung an Rotorblättern ist es jedoch notwendig, die spezielle Form der Rotorblattoberfläche zu berücksichtigen.

Im Stand der Technik gibt es neben Dichtungsanordnungen, welche für glatte Oberflächen geeignet sind, auch solche, bei denen eine Anpassung an spezielle Geometrien berücksichtigt werden.

In der DE 10 2010 025 803 A1 ist beispielsweise eine Dichtungsanordnung offenbart, welche eine geeignete Form zur Abdichtung eines Dünnringlagers aufweist.

Eine weitere Dichtungsanordnung ist in der DE 600 24 701 T2 offenbart. Auch hier wird eine spezielle Geometrie berücksichtigt, indem die Dichtungsanordnung Dichtungszähne und Bürstendichtungsborsten aufweist. Diese Dichtung ist insbesondere für rotierende Teile von Maschinen geeignet.

Aus der US 5 213 346 A ist ein Verfahren und eine Vorrichtung für die Dichtung von zwei relativ zueinander beweglichen Oberflächen bekannt. Dabei wird durch Umschlagen eines dünnen flexiblen Folienmaterials um einen Stab ein mehrschichtiges, abgeflachtes, längliches Dichtelement gebildet, was beidseitig in der Art eines Keders jeweils mit den zu dichtenden Flächen verbunden ist und einen Spalt überspannt.

Die US 2003/066933 A1 offenbart Dichtungen für die Verkleidung von Flugzeugrümpfen, die als Lippendichtung mit einer parallel dazu verlaufenden radialen elastischen Wulst ausgebildet ist.

In der US 7 051 982 B1 wird eine Verkleidungsanordnung zum Überbrücken einer festen Struktur eines Flugzeugs mit einer flexiblen Dichtung offenbart, wobei die flexible Dichtung aus einem gummiartigen Material ausgebildet ist, die auch bei der relativen Bewegung der Strukturen zueinander kontinuierlich dichtet.

Für den Einsatz von Dichtungsanordnungen an Wartungskammern für Reparaturen an Rotorblättern ist jedoch eine gewisse Universalität unabdingbar. Das heißt, die Dichtungsanordnung sollte Anpassungen an unterschiedliche Typen und Geometrien von Rotorblättern gewährleisten und einen universellen Einsatz der Wartungskammer ermöglichen.

Die Aufgabe der Erfindung besteht darin, eine Dichtungsanordnung zur Verfügung zu stellen, die eine zuverlässige Abdichtung eines Spaltes, beispielsweise zwischen einer Rotorblattoberfläche und einer Wartungskammer, gewährleistet. Die Dichtungsanordnung sollte weiterhin die Abdichtung von verschiedenen Geometrien und Lagen der Oberflächen zueinander ermöglichen und entsprechend adaptierbar ausgebildet sein.

Die Aufgabe wird durch einen Gegenstand mit den Merkmalen gemäß Patentanspruch 1 gelöst. Weiterbildungen sind in den abhängigen Patentansprüchen angegeben.

Die Aufgabe der Erfindung wird insbesondere durch eine Dichtungsanordnung gelöst, die geeignet ist, einen Spalt mit einer Spaltbreite in Spaltquerrichtung und einer Spaltlänge in Spaltlängsrichtung zwischen einer ersten und einer zweiten Oberfläche abzudichten. Dabei ist ein streifenförmiges Dichtelement über die Spaltlänge in Spaltlängsrichtung auf der ersten Oberfläche angeordnet und wird mit wenigstens einem Befestigungselement zur Abdichtung an die erste Oberfläche angepresst. Zudem ist ein flächenförmiges Dichtelement zur Überbrückung der Spaltbreite in Spaltquerrichtung auf einer Seite mit dem streifenförmigen Dichtelement und auf der anderen Seite mit der zweiten Oberfläche verbunden.

Das Konzept für die Dichtungsanordnung besteht somit darin, dass eine Dichtung als streifenförmiges Dichtelement an die erste trocken zu haltende Oberfläche angepresst wird und den unter der Dichtung liegenden Bereich der ersten Oberfläche vor Feuchtigkeit von oben schützt und Regenwasser beispielsweise ableitet. Das streifenförmige Dichtelement ist funktionsgemäß somit derart ausgebildet, dass es sich an die erste Oberfläche anlegt und auf der ersten Oberfläche herablaufendes Regenwasser von der ersten Oberfläche ableitet.

Die Ableitung des Regenwassers erfolgt weiterhin über ein flächenförmiges Dichtelement, welches mit dem streifenförmigen Dichtelement verbunden ist und welches zusätzlich flächig den Spalt zwischen der ersten Oberfläche und der zweiten Oberfläche dachartig überspannt, so dass der darunterliegende Bereich vor Regenwasser und abgeleitetem Regenwasser geschützt ist. Das flächenförmige Dichtelement ist dabei derart ausgebildet, dass auch größere Spaltbreiten und sich ändernde Spaltbreiten über die Spaltlänge dachartig abgedichtet werden.

Ein Spalt im Sinne der Erfindung ist eine einen Zwischenraum bildende Öffnung oder Lücke zwischen zwei Oberflächen. Die Abdichtung des Spaltes durch die Dichtungsanordnung schützt den darunterliegenden Teil einer ersten Oberfläche sowie den Bereich des Spaltes vor Wasser, insbesondere vor Regenwasser.

In einer vorteilhaften Ausgestaltung der Erfindung sind das streifenförmige Dichtelement und das flächenförmige Dichtelement an einem Stabilisierungsprofil angeordnet und über dieses miteinander verbunden. Bevorzugt wird das streifenförmige Dichtelement über das Stabilisierungsprofil mittels des Befestigungselementes an die erste Oberfläche angepresst. Sofern das streifenförmige Dichtelement eine ausreichende Stabilität aufweist, ist ein Stabilisierungsprofil gegebenenfalls nicht erforderlich und das Befestigungselement presst dann das streifenförmige Dichtelement direkt an die erste Oberfläche.
Ein streifenförmiges Dichtelement besteht vorteilhafterweise aus einem zur Abdichtung geeigneten flexiblem Material, wie beispielsweise Gummi oder gummiähnlichen Kunststoffen. Das streifenförmige Dichtelement besitzt eine große Ausdehnung in einer Längsrichtung und hat bevorzugt einen über seine Länge gleichbleibenden Querschnitt. Geeignet ist beispielsweise ein Querschnitt in Form einer Ellipse oder eines Rechtecks. Vorteilhaft ist eine Ausbildung des streifenförmigen Dichtelementes als Dichtlippe mit streifenförmigem Querschnitt.
Das streifenförmige und das flächenförmige Dichtelement sind derart miteinander verbunden, dass kein Wasser zwischen die Dichtelemente und in den abgedichteten Bereich gelangen kann.

In bevorzugten Ausgestaltungen übertragen und erzeugen ein oder mehrere Andruckelemente den Anpressdruck vom Befestigungselement über das Stabilisierungsprofil auf das streifenförmige Dichtelement.

Das Befestigungselement für die Dichtungsanordnung ist vorzugsweise als Saugheber ausgebildet, welcher bevorzugt an der ersten Oberfläche, der Rotorblattoberfläche beispielsweise, fixierbar ist.

Erfindungsgemäß ist das flächenförmige Dichtelement als Spannplane ausgebildet, welche aufgrund ihrer fexiblen und elastischen Eigenschaften oder mittels wenigstens einem Spannelement die Spaltbreite in Spaltquerrichtung überbrückend gespannt und dachartig über dem Spalt angeordnet ist. Die Spannplane ist auf einer Seite an dem streifenförmigen Dichtelement und auf der anderen Seite vorzugsweise an der zweiten Oberfläche fixiert.

Nach einer vorteilhaften Ausgestaltung sind die Spannelemente als Spiralfedern oder als elastische Bänder ausgebildet.

Eine Ausgestaltung der Dichtungsanordnung beinhaltet eine nicht dichtende Verbindung des flächenförmigen Dichtelementes mit der zweiten Oberfläche. Dabei ist zusätzlich eine Rücklaufplane ohne Spannung derart angeordnet, dass die Rücklaufplane mit der zweiten Oberfläche und dem flächenförmigen Dichtelement dichtend, aber ohne Spannung, verbunden ist. In dieser Ausgestaltung sind die Funktion der gespannten Überdachung des Spaltes und der Abdichtung des Randbereiches zur zweiten Oberfläche hin getrennt und den Elementen der Spannplane und der Rücklaufplane separat zugeordnet.

Regenwasser gelangt in diesem Fall zwischen die Spannplane als flächenförmiges Dichtelement und die zweite Oberfläche und kann aber durch die Rücklaufplane nicht in den Spalt gelangen.

Erfindungsgemäß ist die Dichtungsanordnung derart positioniert, dass das streifenförmige Dichtelement an der ersten Oberfläche geodätisch den höchsten Punkt der Dichtungsanordnung bildet und das flächenförmige Dichtelement abwärts geneigt zur zweiten Oberfläche hin ausgerichtet ist. Dementsprechend wird Regenwasser im Bereich des Spaltes von der ersten Oberfläche über das streifenförmige Dichtelement und das flächenförmige Dichtelement zur zweiten Oberfläche geleitet und auf dieser zweiten Oberfläche, dem Dach oder einer Blende des Daches einer Wartungskammer beispielsweise, abgeleitet.

Die Dichtungsanordnung ist somit besonders geeignet zur Abdichtung einer Wartungskammer. In dieser Ausgestaltung sind die erste Oberfläche als Rotorblattoberfläche eines Rotorblattes einer Windkraftanlage und die zweite Oberfläche als Dach der Wartungskammer anzusehen. Die Dichtungsanordnung dichtet dabei den Spalt zwischen dem Rotorblatt und dem Dach der Wartungskammer ab.

Vorteilhaft ist das streifenförmige Dichtelement mittels nur eines Befestigungselementes über die gesamte Spaltlänge an die erste Oberfläche anpressbar.

In einer alternativen Ausführung pressen mehrere Befestigungselemente an mehreren zueinander beabstandeten Andruckpunkten das streifenförmige Dichtelement an die erste Oberfläche an. Das streifenförmige Dichtelement wird dann mittels des aufgewendeten Druckes an den einzelnen Andruckpunkten angedrückt und passt sich so flexibel an die Form der ersten Oberfläche an.

In einer bevorzugten Variante ist die Dichtungsanordnung derart ausgestaltet, dass sie zur Nachrüstung an bestehende Wartungskammern geeignet ist. Die Dichtungsanordnung umfasst in dieser Ausgestaltung auch eine Blende, welche der zweiten Oberfläche entspricht und oberhalb einer Wartungskammer angebracht werden kann. Vorteilhaft weist die Blende mehrere Befestigungsstellen auf, in denen die Befestigungselemente der Dichtungsanordnung in Nichtgebrauchsstellung aufbewahrt werden können.

Konzeptionsgemäß dichtet die zweiteilige Dichtungsanordnung einen Spalt zwischen zwei Oberflächen ab. Ein erster und ein zweiter Teil der Dichtungsanordnung sind dichtend miteinander verbunden, wobei der erste Teil der Dichtungsanordnung eine abdichtende Verbindung zu der ersten Oberfläche herstellt und der zweite Teil der Dichtungsanordnung den Spalt zwischen den beiden Oberflächen überspannt. Der erste Teil der Dichtungsanordnung ist flexibel gestaltet, sodass der erste Teil der Dichtungsanordnung an die Form der ersten Oberfläche anpassbar ausgestaltet ist. Die Größe des zweiten Teiles der Dichtungsanordnung ist derart gewählt, dass eine Abdichtung des Spaltes durch Überspannen gewährleistet ist.

Mit Hilfe der Dichtungsanordnung ist es möglich, eine wasserdichte Überbrückung eines großen und in seiner Spaltbreite variierenden Spaltes zwischen zwei Oberflächen auch dann zu realisieren, wenn eine Oberfläche davon konvex und/ oder konkav gekrümmt ist.
Des Weiteren ist die Dichtungsanordnung geeignet, Spalte zwischen nicht parallelen Flächen abzudichten, wie beispielsweise den Spalt zwischen einer Rotorblattoberfläche und dem Dach einer Wartungskammer, welche orthogonal zueinander ausgerichtet sind.
Die Rotorblattoberfläche unterhalb der Dichtungsanordnung bleibt trocken, sodass wasserempfindliche Arbeiten, wie beispielsweise das Aufbringen von Beschichtungen, auch bei Regen in der Wartungskammer durchgeführt werden können.

Vorteilhafterweise ist die Dichtwirkung unempfindlich gegenüber Relativbewegungen der zu dichtenden Fläche, was besonders für Reparaturen an Windkraftanlagen geeignet ist, da die Rotorblätter aufgrund ihrer Abmaße merklich schwingen.

Die Dichtungsanordnung hat weiterhin eine einfache, robuste, leichte, kostengünstige und kompakte Bauform und die Dichtungsanordnung kann über beliebige Längen angewendet werden. Vorteilhafterweise kann die Dichtungsanordnung schnell und sicher angebracht und auch wieder gelöst werden.

Ein großer Vorteil der erfindungsgemäßen Dichtungsanordnung ist, dass diese auch an bestehende Systeme nachgerüstet werden kann.

Wartungskammern mit der erfindungsgemäßen Dichtungsanordnung sind universell in Bezug auf den Rotorblattyp einsetzbar und die Abhängigkeit der Wartungs- und Reparaturarbeiten von der Wetterlage nimmt ab.

Mit Hilfe der erfindungsgemäßen Dichtungsanordnung kann eine vollständige Abdichtung erreicht werden. Kleine Unebenheiten in den abzudichtenden Oberflächen werden durch das flexible streifenförmige Dichtelement ausgeglichen und sich über die Länge verändernde Spaltbreiten gleicht das flächenförmige Dichtelement aus.

Ein entscheidender Vorteil von Wartungskammern mit der erfindungsgemäßen Dichtungsanordnung besteht darin, dass Ausfallzeiten bei Wartungsarbeiten wegen äußeren Einflüssen, wie Wind und Regen, durch die zuverlässige Abdichtung deutlich reduziert werden können.

Außerdem hält die Dichtungsanordnung auf Grund ihrer Konstruktion hohem Wasserdruck von oben Stand, was eine gute Dichtwirkung sogar bei plötzlich eintretendem Starkregen garantiert.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Fig. 1**:: Dichtungsanordnung an einem Rotorblatt, perspektivisch von schräg oben,
- **Fig. 2:**: Ausschnitt eines Teils der Dichtungsanordnung inklusive Saugheber,
- **Fig. 3:**: Seitliche Ansicht der Dichtungsanordnung am Rotorblatt,
- **Fig. 4:**: Dichtungsanordnung an einem Rotorblatt von schräg unten und
- **Fig. 5:**: Dichtungsanordnung als Anschluss an ein Blendensystem einer Wartungskammer zur Wartung eines Rotorblattes.

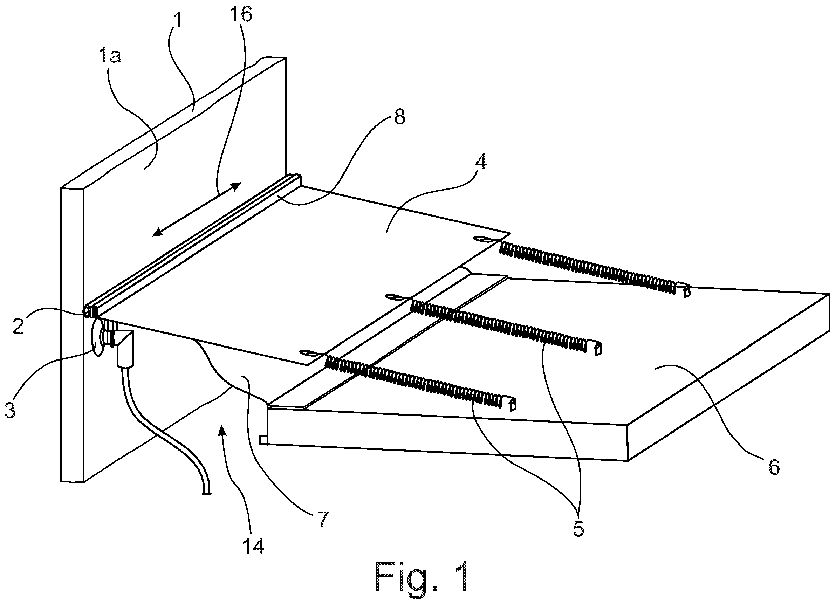

In **Fig. 1** ist eine Dichtungsanordnung dargestellt, welche einen Spalt 14 zwischen einem Rotorblatt 1 einer Windkraftanlage und einer Blende 6 des Daches einer Wartungskammer angeordnet ist. An der der Dichtungsanordnung zugewandten Rotorblattoberfläche 1a, der ersten Oberfläche, liegt ein streifenförmiges Dichtelement 2 an. Dieses streifenförmige Dichtelement 2 ist mit mehreren Saughebern 3 verbunden, welche an der Rotorblattoberfläche 1a angebracht sind und das aus einem biegsamen Material bestehende streifenförmige Dichtelement 2 entlang der äußeren Kontur der Rotorblattoberfläche 1a halten und an die Rotorblattoberfläche 1a anpressen. An dem streifenförmigen Dichtelement 2 ist eine Spannplane 4 angebracht, welche den darunter befindlichen abgedichteten Teil der Rotorblattoberfläche 1a und den Spalt 14 vor Regen schützt. Die Spannplane 4 wird mit Hilfe von Spannelementen 5, welche an der Blende 6 des Daches der Wartungskammer befestigt sind, straff gehalten. Die Spannelemente 5 sind als Federn 5 ausgeführt und an der Spannplane 4 befestigt, so dass die Spannplane 4 zwischen dem streifenförmigen Dichtelement 2 und der Blende 6 gespannt wird. Der Spalt 14 zwischen dem Dach der Wartungskammer und dem Rotorblatt 1 wird von der Dichtungsanordnung vor Witterung und insbesondere vor Regenwasser geschützt. Weiterhin wird die Rotorblattoberfläche 1a unterhalb des streifenförmigen Dichtelements 2 vor am Rotorblatt 1 herablaufendem Regenwasser geschützt und für Reparaturarbeiten trocken gehalten. Dadurch sind beispielsweise Beschichtungen am Rotorblatt 1 möglich, welche eine trockene Oberfläche erfordern.
Um den abgedichteten Bereich vor Wasserrücklauf von der Blende 6 zu schützen, ist an der Blende 6 eine nicht gespannte Rücklaufplane 7 angebracht. Die Rücklaufplane 7 leitet von der Blende 6 zum Spalt 14 hinlaufendes Wasser ab und schließt den Raum der Wartungskammer nach oben hin ab.
Die Dichtungsanordnung überspannt und dichtet den Spalt 14 zwischen der geraden Kante der Blende 6 und der gekrümmten Rotorblattoberfläche 1a ab. Zur Stützung und Stabilisierung des streifenförmigen Dichtelementes 2 entlang seiner Längsausdehnung in Spaltlängsrichtung 16 wird das streifenförmige Dichtelement mit einem Stabilisierungsprofil 8 verstärkt.

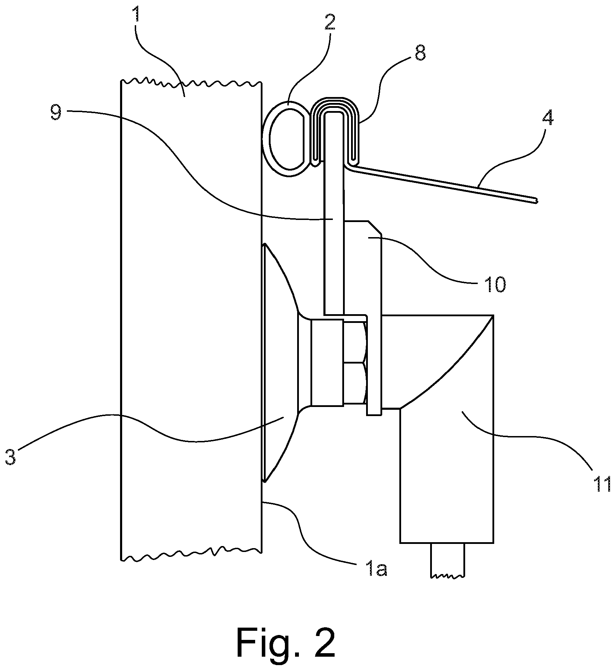

In **Fig. 2** ist ein Teil der Dichtungsanordnung in einer Ausführungsform in vergrößerter Darstellung gezeigt. Das streifenförmige Dichtelement 2 ist als Hohlprofil aus flexiblem Kunststoffe ausgeführt und an dem Stabilisierungsprofil 8 angeordnet. Das Stabilisierungsprofil 8 ist mit einem Andruckelement 9 formschlüssig verbunden. Das Andruckelement 9 besteht vorzugsweise aus glasfaserverstärktem Kunststoff, da dieser über eine geeignete Flexibilität sowie Stabilität und Steifigkeit verfügt und eine Dichtkraft für das streifenförmige Dichtelement 2 erzeugen und auf dieses in Spaltlängsrichtung über die gesamte Länge des streifenförmigen Dichtelementes 2 übertragen kann. Damit ist eine optimale Anpassung der Dichtungsanordnung auf der Seite des streifenförmigen Dichtelementes 2 an die Form des Rotorblattes 1 möglich. Mittels eines Verbindungselementes 10 ist das Andruckelement 9 mit dem Saugheber 3 verbunden. Die Saugheber 3 können sowohl aktiv als auch passiv ausgebildet sein. In Fig. 2 ist ein aktiver Saugheber 3 mit einem Vakuumanschluss 11 dargestellt. Über den Vakuumanschluss 11 wird ein Unterdruck erzeugt, der die Dichtungsanordnung an der Rotorblattoberfläche 1a hält. Alternativ kann das Befestigungselement 3 für die Dichtungsanordnung auch über einen passiv wirkenden Saugheber 3 realisiert werden. Dabei wird eine Kraft auf einen Hebel übertragen, der mit dem Saugheber 3 verbunden ist und einen Unterdruck an der Rotorblattoberfläche 1a erzeugt. Ein solches passives System ist aufgrund der Funktionsweise einfacher und besonders kostengünstig zu realisieren.
Die Spannplane 4 wird mit dem Stabilisierungsprofil 8 auf ein in der Steifigkeit einstellbares Andruckelement 9 aufgeschoben und gegebenenfalls verklebt. Aufgrund der hohen Biegsamkeit des Materials sind auch kleine Krümmungsradien für das Stabilisierungsprofil 8 realisierbar und eine gleichmäßige Pressung der Dichtung ist realisierbar.

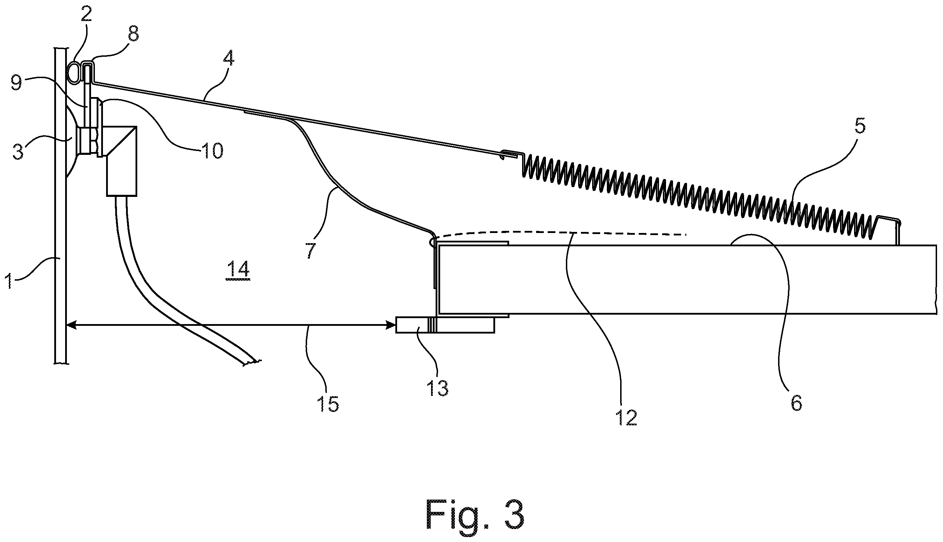

Eine weitere Ansicht der Dichtungsanordnung ist in Fig. 3 dargestellt. Hier ist die Dichtungsanordnung zwischen Rotorblatt 1 und Blende 6 in der Seitenansicht abgebildet. Die Dichtungsanordnung ist am Rotorblatt 1 mittels Saugheber 3 befestigt. Über das Verbindungselement 10, das Andruckelement 9 und das Stabilisierungsprofil 8 wird die Dichtkraft auf das streifenförmige Dichtelement 2 übertragen und die Dichtungsanordnung auf der Rotorblattseite an dieser gehalten. Die Rücklaufplane 7, welche Wasser davon abhält, von der Blende 6 zurück in den vor Wasser zu schützenden Bereich zu laufen, ist an der Spannplane 4 zwischen dem Stabilisierungsprofil 8 und den Spannelementen 5 befestigt. In der durch eine Strichlinie angedeuteten Nichtgebrauchsstellung 12 ist die Rücklaufplane 7 zur Blende 6 hin umgelegt. Die Spannplane 4 ist dichtend mit der Rücklaufplane 7 verbunden und überspannt den Spalt 14 in Spaltquerrichtung 15.

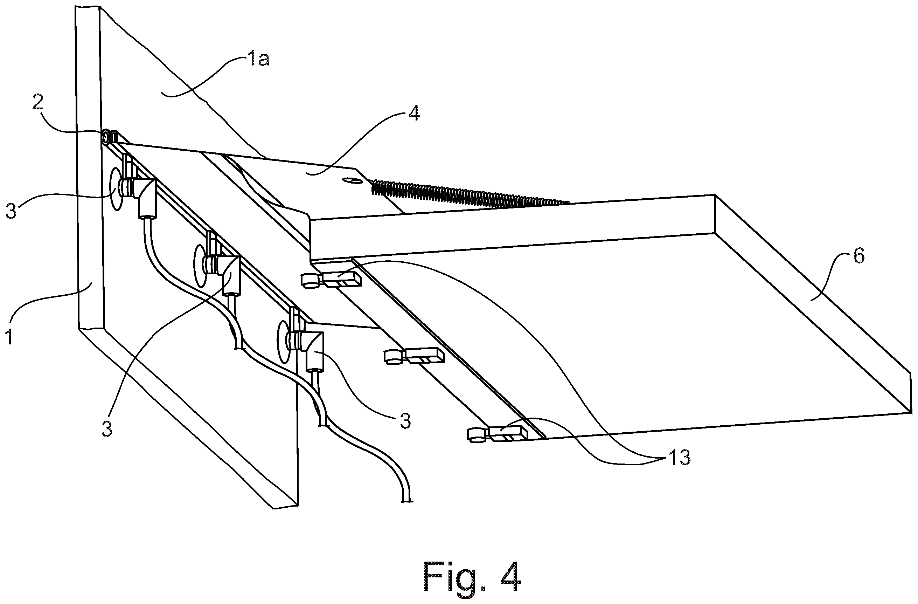

In **Fig. 4** ist eine perspektivische Darstellung von schräg unten der mittels mehreren Saughebern 3 am Rotorblatt 1 befestigten Dichtungsanordnung dargestellt. Die Saugheber 3, welche an der Rotorblattoberfläche 1a haften, können in der Nichtgebrauchsstellung der Dichtungsanordnung an Befestigungsstellen 13 an der Blende 6 während des Verfahrens der Wartungskammer entlang des Rotorblattes oder während des Transports gehaltert und arretiert werden. Zur sicheren Arretierung der Befestigungselemente 3 werden die Befestigungsstellen 13 bevorzugt derart gestaltet, dass die Saugheber 3 über Schnappverbindungen an der Blende 6 gehaltert werden.

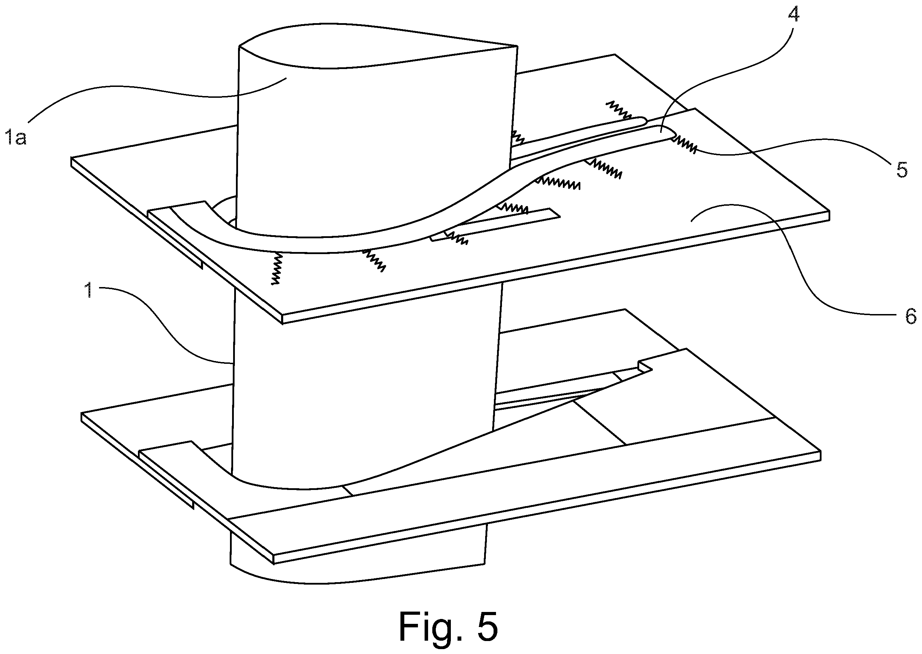

In **Fig. 5** ist eine Ausführung der Dichtungsanordnung als Anschluss an ein Blendensystem einer Wartungskammer für Windkraftanlagen dargestellt. Zur Reduzierung der Spaltbreite zwischen einer Wartungskammer und einer Rotorblattoberfläche 1a ist sowohl das Dach als auch der Boden der Wartungskammer als Blendensystem ausgebildet. Ein derartiges Blendensystem ist aus mehreren Blendenelementen zusammengesetzt, die gegeneinander verschiebbar und überlappend an unterschiedliche Formen der Rotorblätter 1 anpassbar sind. Der verbleibende Spalt 14 zwischen der Blende 6 und der Rotorblattoberfläche 1a wird mit Hilfe der Dichtungsanordnung gemäß der Figuren 1 bis 4 überbrückt. Die Spannplane 4 ist über Spannelemente 5 an der Blende 6 befestigt und wird durch diese gespannt. Die Spannelemente 5 sind flexibel, beispielsweise als Federn, ausgeführt, so dass sie in der Lage sind, Relativbewegungen der Blende 6 zur Rotorblattoberfläche 1a, wie sie durch Schwingungen der Rotorblätter 1 verursacht werden, auszugleichen.
Zur kompletten Abdichtung eines Rotorblattes 1 von mehreren Seiten ist die Dichtungsanordnung, wie in Fig. 5 dargestellt, mehrteilig ausgeführt. An den Verbindungsstellen der einzelnen Teilstücke der Dichtungsanordnung überlappen sich diese.

Zusammengefasst besteht der erste Teil der Dichtungsanordnung aus einem streifenförmigen Dichtelement, beispielsweise aus Gummi, Schaumstoff oder Ähnlichem. Der zweite Teil der Dichtungsanordnung wird als flächenförmiges Dichtelement realisiert, beispielsweise in Form einer Spannplane, einer Folie, einer beschichteten Stoffbahn oder eines textilen Verbundwerkstoffes. Das streifenförmige Dichtelement und das flächenförmige Dichtelement überspannen den Spalt zwischen den beiden zu verbindenden Oberflächen. Vorteilhaft ist eine Verstärkung des streifenförmigen Dichtelementes durch ein Stabilisierungsprofil vorgesehen und das streifenförmige Dichtelement wird beispielsweise mittels einer Klebeverbindung mit dem Stabilisierungsprofil verbunden.

### Bezugszeichenliste

- 1: Rotorblatt
- 1a: erste Oberfläche, Rotorblattoberfläche
- 2: streifenförmiges Dichtelement, Dichtprofil
- 3: Saugheber, Befestigungselement
- 4: flächenförmiges Dichtelement, Spannplane
- 5: Spannelemente, Federn
- 6: zweite Oberfläche, Blende
- 7: Rücklaufplane
- 8: Stabilisierungsprofil
- 9: Andruckelement
- 10: Verbindungselement zwischen Andruckelement und Saugheber
- 11: Vakuumanschluss
- 12: Nichtgebrauchsstellung der Rücklaufplane
- 13: Befestigungsstellen
- 14: Spalt
- 15: Spaltquerrichtung
- 16: Spaltlängsrichtung

## Patentansprüche

1. Dichtungsanordnung für einen Spalt (14) mit einer Spaltbreite in Spaltquerrichtung (15) und einer Spaltlänge in Spaltlängsrichtung (16) zwischen einer ersten und einer zweiten Oberfläche (1a, 6), wobei ein streifenförmiges Dichtelement (2) über die Spaltlänge in Spaltlängsrichtung (16) auf der ersten Oberfläche (1a) angeordnet ist und mit wenigstens einem über ein Befestigungselement (3) zur Abdichtung an die erste Oberfläche (1a) angepresst wird und dass ein flächenförmiges Dichtelement (4) zur Überbrückung der Spaltbreite in Spaltquerrichtung (15) auf einer Seite mit dem streifenförmigen Dichtelement (2) und auf der anderen Seite mit der zweiten Oberfläche (6) verbunden ist, **dadurch gekennzeichnet, dass** das flächenförmige Dichtelement (4) als Spannplane ausgebildet ist, welche mittels wenigstens einem Spannelement (5) die Spaltbreite in Spaltquerrichtung (15) überbrückend gespannt ausgebildet ist und das streifenförmige Dichtelement (2) an der ersten Oberfläche (1a) geodätisch den höchsten Punkt der Dichtungsanordnung bildet und das flächenförmige Dichtelement (4) abwärts geneigt zur zweiten Oberfläche (6) hin ausgerichtet ist, so dass Regenwasser im Bereich des Spaltes (14) von der ersten Oberfläche (1a) über das streifenförmige Dichtelement (2) und das flächenförmige Dichtelement (4) zur zweiten Oberfläche (6) geleitet und auf dieser abgeleitet wird.

2. Dichtungsanordnung nach Anspruch 1, **dadurch gekennzeichnet, dass** das streifenförmige Dichtelement (2) und das flächenförmige Dichtelement (4) an einem Stabilisierungsprofil (8) angeordnet sind, wobei das Stabilisierungsprofil (8) mittels des Befestigungselementes (3) an die erste Oberfläche (1a) angepresst wird.

3. Dichtungsanordnung nach Anspruch 2, **dadurch gekennzeichnet, dass** wenigstens ein Andruckelement (9) den Anpressdruck für das streifenförmige Dichtelement (2) vom Befestigungselement (3) auf das Stabilisierungsprofil (8) überträgt.

4. Dichtungsanordnung nach einem der Ansprüche 1 bis 3, **dadurch gekennzeichnet, dass** das Befestigungselement (3) als Saugheber ausgebildet und an der ersten Oberfläche (1a) angeordnet und temporär fixiert ist.

5. Dichtungsanordnung nach einem der Ansprüche 1 bis 4, **dadurch gekennzeichnet, dass** die Spannelemente (5) an der zweiten Oberfläche (6) fixiert sind.

6. Dichtungsanordnung nach einem der Ansprüche 1 bis 5, **dadurch gekennzeichnet, dass** die Spannelemente (5) als Spiralfedern ausgebildet sind.

7. Dichtungsanordnung nach einem der Ansprüche 1 bis 6, **dadurch gekennzeichnet, dass** das flächenförmige Dichtelement (4) mit der zweiten Oberfläche (6) nicht dichtend verbunden ist und dass eine Rücklaufplane (7) ohne Spannung mit der zweiten Oberfläche (6) und dem flächenförmigen Dichtelement (4) dichtend verbunden angeordnet ist.

8. Dichtungsanordnung nach einem der Ansprüche 1 bis 7, **dadurch gekennzeichnet, dass** die erste Oberfläche (1a) als Rotorblattoberfläche eines Rotorblattes (1) einer Windkraftanlage und die zweite Oberfläche (6) als Dach einer Wartungskammer für Rotorblätter (1) ausgebildet ist und die Dichtungsanordnung den Spalt (14) zwischen dem Rotorblatt (1) und dem Dach der Wartungskammer abdichtet.

9. Dichtungsanordnung nach einem der Ansprüche 1 bis 8 **dadurch gekennzeichnet, dass** das streifenförmige Dichtelement (1a) derart ausgebildet ist, dass das streifenförmige Dichtelement (1a) mittels eines Befestigungselementes (3) über die gesamte Spaltlänge an die Oberfläche (1a) anpressbar ist.

10. Dichtungsanordnung nach einem der Ansprüche 1 bis 9, **dadurch gekennzeichnet, dass** mehrere Befestigungselemente (3) an mehreren zueinander beabstandeten Andruckpunkten das streifenförmige Dichtelement (2) an die erste Oberfläche (1a) anpressen.

## Claims

1. Seal arrangement for a gap (14) with a gap width in the gap transverse direction (15) and a gap length in the gap longitudinal direction (16) between a first and a second surface (1a, 6), wherein a strip-shaped sealing element (2) is arranged on the first surface (1a) across the gap length in the gap longitudinal direction (16) and pressed against the first surface (1a) by at least one attachment element (3) for sealing and that a planar sealing element (4) for bridging the gap width in the gap transverse direction (15) is connected to the strip-shaped sealing element (2) on one side and to the second surface (6) on the other side, **characterised in that** the planar sealing element (4) is produced as a tensioned cover that is stretched across and bridges the gap width in the gap transverse direction (15) using at least one tensioning element (5), wherein the strip-shaped sealing element (2) forms the highest point of the seal arrangement geodetically on the first surface (1a) and the planar sealing element (4) is aligned such that it is inclined downwards to the second surface (6), so that rainwater in the area of the gap (14) is channelled from the first surface (1a), via both the strip-shaped sealing element (2) and the planar sealing element (4) to the second surface (6) and is then drained away on this surface.

2. Seal arrangement according to claim 1, **characterised in that** the strip-shaped sealing element (2) and the planar sealing element (4) are arranged on a stabilisation profile (8), wherein the stabilisation profile (8) is pressed against the first surface (1a) by the attachment element (3).

3. Seal arrangement according to claim 2, **characterised in that** at least one pressing element (9) transfers the contact pressure for the strip-shaped sealing element (2) from the attachment element (3) to the stabilisation profile (8).

4. Seal arrangement according to one of the claims 1 to 3, **characterised in that** the attachment element (3) is produced as a suction lifter and is both arranged and temporarily fixed on the first surface (1a).

5. Seal arrangement according to one of the claims 1 to 4, **characterised in that** the tensioning elements (5) are fixed on the second surface (6).

6. Seal arrangement according to one of the claims 1 to 5, **characterised in that** the tensioning elements (5) are produced as spiral springs.

7. Seal arrangement according to one of the claims 1 to 6, **characterised in that** the planar sealing element (4) is connected to the second surface (6) in a non-sealing way and that a return flow cover (7) is arranged such that it has a sealing connection with the second surface (6) and the planar sealing element (4) without tension.

8. Seal arrangement according to one of the claims 1 to 7, **characterised in that** the first surface (1a) is produced as a rotor blade surface of a rotor blade (1) of a wind turbine, the second surface (6) is produced as a roof of a maintenance chamber for rotor blades (1) and the seal arrangement seals off the gap (14) between the rotor blade (1) and the roof of the maintenance chamber.

9. Seal arrangement according to one of the claims 1 to 8 **characterised in that** the strip-shaped sealing element (1a) is produced in such a way that the strip-shaped sealing element (1a) can be pressed against the surface (1a) across the entire gap length using an attachment element (3).

10. Seal arrangement according to one of the claims 1 to 9, **characterised in that** multiple attachment elements (3) press the strip-shaped sealing element (2) against the first surface (1a) at multiple pressure points that are spaced apart from one another.

## Revendications

1. Agencement de joint pour un interstice (14) présentant une largeur dans le sens transversal (15) de l'interstice, et une longueur dans le sens longitudinal (16) de l'interstice entre une première et une deuxième surface (1a, 6), sachant qu'un élément d'étanchéité en forme de bandelette (2) est disposé sur la longueur de l'interstice dans le sens longitudinal (16) de l'interstice sur la première surface (1a) et qu'il est pressé avec au moins un élément de fixation (3) pour étanchéiser contre la première surface (1a), et en ce qu'un élément d'étanchéité de forme plate (4) pour ponter la largeur d'interstice dans le sens transversal (15) de l'interstice est relié sur un côté avec l'élément d'étanchéité en forme de bandelette (2) et sur l'autre côté avec la deuxième surface (6), **caractérisé en ce que** l'élément d'étanchéité (4) de forme plate est configuré en bâche tendue qui au moyen d'au moins un élément tendeur (5) est configurée pour ponter de manière tendue la largeur d'interstice dans le sens transversal (15) de l'interstice, et que l'élément d'étanchéité en forme de bandelette (2) sur la première surface (1a) forme géodésiquement le point le plus haut de l'agencement de joint, et que l'élément d'étanchéité de forme plate (4) incliné vers le bas en direction de la deuxième surface (6) est orienté de sorte que l'eau de pluie dans la zone de l'interstice (14) est guidée de la première surface (1a) via l'élément d'étanchéité en forme de bandelette (2) et l'élément d'étanchéité de forme plate (4) en direction de la deuxième surface (6) et qu'elle est évacuée sur cette dernière.

2. Agencement de joint selon la revendication 1, **caractérisé en ce que** l'élément d'étanchéité en forme de bandelette (2) et l'élément d'étanchéité de forme plate (4) sont disposés contre un profilé de stabilisation (8), sachant que le profilé de stabilisation (8) est pressé au moyen de l'élément de fixation (3) contre la première surface (1a).

3. Agencement de joint selon la revendication 2, **caractérisé en ce qu'**au moins un élément d'applique (9) communique la pression d'applique, pour l'élément d'étanchéité en forme de bandelette (2), de l'élément de fixation (3) au profilé de stabilisation (8).

4. Agencement de joint selon l'une des revendications 1 à 3, **caractérisé en ce que** l'élément de fixation (3) est configuré en dispositif de levage à ventouse et qu'il est disposé et immobilisé de manière temporaire contre la première surface (1a).

5. Agencement de joint selon l'une des revendications 1 à 4, **caractérisé en ce que** les éléments tendeurs (5) sont immobilisés contre la deuxième surface (6).

6. Agencement de joint selon l'une des revendications 1 à 5, **caractérisé en ce que** les éléments tendeurs (5) sont configurés en ressorts spiralés.

7. Agencement de joint selon l'une des revendications 1 à 6, **caractérisé en ce que** l'élément d'étanchéité (4) de forme plate n'est pas relié de manière étanchéisante avec la deuxième surface (6), et qu'une bâche de flux retour (7) est disposée reliée sans tension, et en étanchéisant, avec la deuxième surface (6) et avec l'élément d'étanchéité en forme de surface (4).

8. Agencement de joint selon l'une des revendications 1 à 7, **caractérisé en ce que** la première surface (1a) est configurée comme surface d'une pale de rotor (1) d'une éolienne et que la deuxième surface (6) est configurée comme toit d'un compartiment de maintenance des pales de rotor (1), et que l'agencement de joint étanchéise l'interstice (14) entre la pale de rotor (1) et le toit du compartiment de maintenance.

9. Agencement de joint selon l'une des revendications 1 à 8, **caractérisé en ce que** l'élément d'étanchéité en forme de bandelette (1a) est configuré de telle sorte que l'élément d'étanchéité en forme de bandelette (1a) est pressable au moyen d'un élément de fixation (3) contre la surface (1a) sur toute la longueur de l'interstice.

10. Agencement de joint selon l'une des revendications 1 à 9, **caractérisé en ce que** plusieurs éléments de fixation (3) pressent, en plusieurs points d'applique mutuellement distants, l'élément d'étanchéité en forme de bandelette (2) contre la première surface (1a).
